# EUROPEAN PATENT SPECIFICATION

(11) **EP 4 475 305 B1**
(45) Date of publication and mention of the grant of the patent: **07.10.2026**
(21) Application number: 23178533.8
(22) Date of filing: 09.06.2023
(51) Int. Cl.: H01M 10/61, H01M 10/625, H01M 50/204, H01M 50/262, H01M 50/30, B64D 27/357, B64D 27/40, H01M 50/249, B64C 3/32

(54) **BATTERY ASSEMBLY, WING OF AN AIRCRAFT, AIRCRAFT, AND METHOD FOR INSTALLING A BATTERY ASSEMBLY**
BATTERIEANORDNUNG, FLÜGEL EINES FLUGZEUGS, FLUGZEUG UND VERFAHREN ZUR INSTALLATION EINER BATTERIEANORDNUNG
ENSEMBLE BATTERIE, AILE D'UN AÉRONEF, AÉRONEF ET PROCÉDÉ D'INSTALLATION D'UN ENSEMBLE BATTERIE

(43) Date of publication of application: 11.12.2024
(73) Proprietor: Vaeridion GmbH, 80538 München (DE)
(72) Inventor: O'CONNOR, William Evans, 81667 Munich (DE); SCHUHMANN, Moritz, 80469 Munich (DE); VASISTA, Srinivas, 80807 Munich (DE); UYAR, Serkan, 81927 Munich (DE); VAN DARTEL, Ivor, 81679 Munich (DE)
(74) Representative: Vossius & Partner Patentanwälte Rechtsanwälte mbB

(56) References cited:
- WO-A1-2022/265633
- CN-U- 211 996 172
- US-A1- 2018 086 472
- "BATTSPAR - COMBINING A WING SPAR AND A BATTERY", vol. 698, no. 37, 1 May 2022 (2022-05-01), XP007150302, ISSN: 0374-4353, Retrieved from the Internet <URL:https://www.researchdisclosure.com/database/RD698037> [retrieved on 20220510]

## Description

Passenger aircrafts today predominantly use fossil-based liquid fuels stored primarily inside internal fuel tanks arranged within one or more wings of the aircrafts, referred to as "wet-wing aircrafts". The storage of fuel inside the wing provides a number of benefits over fuel storage elsewhere in the aircraft. For instance, volume inside the wing is effectively "dead-space". Therefore, more space is available in the fuselage to carry useful, e.g., revenue-generating, passenger and/or cargo load, if the fuselage is not used to store fuel. Moreover, the fuel weight in the wing may reduce wing-bending due to one or more loads, e.g., aerodynamic loads, which may result in a simpler and/or light-weight construction of the wing spars and/or skins. In addition, the fuel mass in the wing remains close to the longitudinal aircraft center of gravity over the flight duration which leads to smaller stabilizer sizes, less drag and weight, and better handling characteristics.

This fuel is combusted in engines, e.g., rotary, turboprops, jet turbines, etc., that convert the chemical energy of the fuel into kinetic energy to propel the aircraft, with heat and various gases as by-products of the combustion.

Different energy means, such as batteries, are being adopted into flying vehicles based on their "clean", e.g., environmentally friendly, properties, albeit at a cost of reduced energy-density at the current stage. With the strict sustainability goals set to reduce the climate impact of aviation, new energy carriers are being investigated by manufacturers of aircraft and aircraft engines. Aircraft propulsion with electric motors which convert electric power into mechanical power to drive a fan or propeller is promising for passenger and cargo transport. The incorporation of batteries providing electrical power for propulsion have been demonstrated in a variety of flying vehicles, including electric conventional take-off and landing (eCTOL) aircrafts and "air-taxi-like" electric vertical take-off and landing (eVTOL) aircrafts. The usage of such energy systems has also grown substantially in other industries, e.g., the automotive industry, over the last decade, which has driven the development and maturity of these systems sufficiently for adoption within the aviation industry.

WO 2022/265633 A1 discloses an aircraft which includes a battery pack, an internal support structure to support the battery pack in the aircraft, a first bracket rigidly coupling the battery pack to the support structure, and a second bracket rotationally coupling the battery pack to the support structure. The first and second brackets are located on opposite sides of the battery pack. US 2018/086472 A1 discloses a battery module which comprises two planar substrates with electrochemical cells secured between to form load-bearing structural components. CN 211 996 172 U discloses a wing rib structure with an integrated battery module. The battery module is installed on an end rib and a middle rib of the wing rib structure so that the battery module is fixed in the wing rib structure. "BATTSPAR - COMBINING A WING SPAR AND A BATTERY", RESEARCH DISCLOSURE, KENNETH MASON PUBLICATIONS, HAMPSHIRE, UK, GB, vol. 698, no. 37, 1 May 2022 (ISSN: 0374-4353) discloses a spar with an integrated battery such that the battery is fully encapsulated in the spar.

Whilst it may be desirable to install the batteries into the wing of electrically driven aircrafts for similar reasons as the storage of fossil-fuel in the wing(s) of conventional fossil-fuel based aircrafts, there are several disadvantages associated therewith which have not, or at least not sufficiently, been addressed by the prior art.

For instance, generally speaking, it is generally desirable and/or required to install a relatively large volume and/or mass of batteries to provide an adequate energy capacity for operating the aircraft. Hence, the batteries would occupy a relatively large space within the wing, i.e., extending along a considerable distance of the spanwise length of the wing, if not the entire spanwise length of the wing.

The height or thickness of the aerofoil profile may also be affected by the required battery volume. Increasing the aerofoil thickness to accommodate the batteries may detrimentally affect the aerodynamic efficiency.

Additionally, the placement of the main structural elements (spars and ribs) in order to accommodate specific sizes of batteries may also be sub-optimal to ensure sufficient battery volume.

Moreover, the provision for ice protection on the wing leading edge will also need to be large enough to sufficiently de/anti-ice the wing in icing conditions, which also "eats" into the available space for batteries in the central part of the wing.

Furthermore, a certain size provision for flight controls and high-lift devices on the wing trailing edge (flaps, ailerons) also "eats" into the available wingbox space.

More, batteries mounted within the wing of an aircraft may be exposed to one or more loads acting on the respective wing, e.g., bending loads and/or twisting loads.

Furthermore, the design of the provisions for feasible and timely access, installation, removal etc. of the batteries whilst ensuring a lightweight aircraft airframe is a challenge, particularly under the above mentioned restrictions.

These issues may adversely affect and/or interfere with one or more operating properties of the wing during operation, i.e., during flight, of the aircraft.

Thus, there is a need to improve the electrically driven aircrafts known from the prior art.

It is therefore an object of the present invention to improve the improved electrically driven aircrafts known from the prior art, in particular by addressing one or more of the aspects above.

The above-identified object is achieved by a battery assembly configured to be mounted within a wing of an aircraft, as defined by the features of claim 1. Preferred embodiments are defined by the features of the dependent claims, respectively.

The battery assembly includes a plurality of battery modules each including at least one battery cell, preferably a plurality of battery cells. The battery cells may be of any suitable configuration and geometry.

The battery assembly includes at least one mounting structure configured to mount the battery module, along a mounting side of the battery module, to at least one support structure within the wing.

The battery assembly is free of a mounting structure, i.e., any mounting structure, for mounting the battery module along a second side of the battery module, the second side being substantially opposite from the mounting side. In other words, one end of the battery module, i.e., the mounting side of the battery module, is configured to be mounted to the support structure within the wing, whereas an opposite end of the battery module, i.e., the second side of the battery module, is a free end, i.e., a non-mounted/non-attached end. Thus, the battery module is configured to be mounted to the support structure only at or along the, particularly only one, mounting side of the battery module. The mounting side and/or the second side of the battery module may each be an entire face and/or an end of the battery module, respectively.

Thus, the battery module may be decoupled from a load path along the wing due to the free, i.e., non-attached, side of the battery module. Thus, one or more loads on the wings are not, or only minimally, transferred through the battery module.

This may allow, according to the presently claimed invention, a plurality of battery modules, i.e., at least two battery modules, to be arranged in series to the respective support structure(s) within the wing, without structurally coupling adjacent battery modules to each other via a common interface. Instead, a structural "break", e.g., a gap of space, may be provided between the adjacent battery modules along the second side of the battery module(s). This may reduce one or more adverse effects and/or interference of the battery modules to the wing, e.g., in respect to deformation, e.g., bending, of the wing during operation of the operation of the aircraft caused by one or more loads, e.g., one or more aerodynamic loads. For instance, a series of battery modules which would be mechanically or structurally interconnected, in particular along a spanwise direction of the wing, may create an additional load path through these modules and therefore interfere with the primary wing load path. This may introduce unwanted mechanical stress and strain in the modules as the wing undergoes deformation, e.g., bending and twisting during operation of the aircraft. This present invention avoids, or at least reduces, such an interference of the primary load path.

Hence, the configuration described above provides a relatively simple and effective means for structurally/mechanically decoupling the battery module(s) from one or more structural loads and/or one or more structural loads paths of the wing, e.g., along a spanwise direction of the wing.

Thus, this may allow complex decoupling mechanisms for decoupling the battery modules from one or more structural load paths of the wing to be dispensed with.

Moreover, this may reduce an impact of one or more wing loads on the battery module(s). In particular, allowing a plurality of battery modules to be arranged side-by-side and/or in series with adjacent battery module(s) structurally and/or mechanically decoupled from each other, e.g., without a common interface, each battery module may be substantially structurally independent from one or more adjacent battery modules. This may allow each battery module to move substantially independently from one or more adjacent battery modules, e.g., during deformation, e.g., bending, of the wing. Hence, less of the wing loads and wing deformations, e.g., wing bending and/or wing twisting, are transferred to the battery module(s) and from one battery to another battery.

This may be advantageous as it may facilitate certification, in particular by not needing to demonstrate safety of load-bearing batteries, e.g., in case of battery failure, e.g., due to a thermal runaway event.

In addition, configuring the battery assembly to be free of a mounting structure for mounting the battery module along the second side of the battery module may facilitate inspection, maintenance, removal, and/or installation of the battery module which may reduce labor costs and/or reduce the time required to perform the mentioned tasks.

Preferably, the battery module has a relatively high integration factor, wherein the integration factor is defined as the total mass of the battery module to the mass of all of the cells, i.e., one or more cells, arranged in the battery module. Typically, the integration factor is in a range of 15% to 30%.

The mounting structure may allow the battery module to be mounted to the support structure by one or more mechanical connectors, e.g., one or more bolts, clips, pins, etc. The mounting structure may provide a releasable attachment of the battery module(s) to the support structure.

The battery module may include at least one thermomechanical cover. The thermomechanical cover(s) may provide a barrier against heat and ejecta, e.g., during thermal runaway. Thus, thermomechanical cover(s) may protect the primary wing structure(s) and/or one or more safety-critical flight controls against high-energy events of the battery module, more specifically the batter cell(s), e.g., during thermal runaway.

The thermomechanical cover(s) may be made of a material with a relatively high thermal resistance, e.g., higher temperature capable polymers, e.g., phenolic, PEEK, polyimide, etc., optionally reinforced with carbon or oxide fibers, a metal of sufficient thickness, e.g. Al, Ti, etc., and/or a ceramic matrix composite, e.g., carbon, alumina, silica, mullite, and SiC fibers reinforced with a matrix of C, SiC, SiOC, and mullite.

The thermomechanical cover may be placed directly over the cells to provide a barrier against heat and mass ejecta. The thermomechanical cover may be provided with holes, cutaways, or other openings which are aligned with and located over the gaps between the cells. This allows hot gas to pass through and avoids or at least reduces pressure to build in this region.

The thermomechanical cover may be preferably used in conjunction with the provision of an open cell foam (preferably polymer) provided directly over the thermomechanical cover which may cause a more diffusive flow, e.g., by slowing down the gas through redirection. This may further protect the hermetic lid from the hot gas and flame.

An over-pressure relief valve, a burst valve, or the like may be provided to from a point of lowest pressure to allow the hot gas to leave the system.

The aircraft may be a fully or a partially electrically driven aircraft. The battery module(s) may be configured to power the electrically driven aircraft. The battery module(s) may be configured to provide the primary power, or the entire power, required to operate the aircraft. However, the batteries may also serve as a partial source of the energy used for propulsion, e.g., in a parallel-hybrid aircraft, serial-hybrid aircraft, full-electric aircraft, or a combination thereof. The battery module/cell(s) may be configured to power one or more electric motors for propelling the aircraft, e.g., the battery module/cell(s) may be configured to power one or more electric motors for driving a rotor or propellor of the aircraft.

The battery module may include a plurality of cells arranged in a spanwise direction of the wing, when the battery module is mounted to the wing. Alternatively, or additionally, the battery assembly may include a plurality of battery modules arranged in a spanwise direction of the wing, when the battery modules are mounted to the wing. The cell(s) may have a range of different configurations, e.g., forms, such as pouch cell(s), prismatic cell(s), cylindrical cell(s), etc., and may be physically and/or electrically arranged in a variety of ways and/or architectures.

The cells, in particular cylindrical cells, may be oriented in a spanwise direction. The longitudinal axis of the cells may thus be oriented in a spanwise direction; particularly rather than in a front - back or up - down direction seen in the direction of flight.

As stated above, the battery module may include a plurality of battery cells. The battery cells of the module may be connected in series and/or parallel. The battery cells of the module which are connected in parallel may be referred to as a "supercell". The module may include a plurality of supercells which are connected in series. Alternatively, or additionally, the battery assembly may include a plurality of battery modules connected in series, referred to as a "pack". The battery assembly may include a plurality of packs connected in parallel.

It is to be noted that an individual module may be of any percentage of the full system voltage, and that each module may be of the same or different voltage.

The support structure may be an integral component of the wing. In particular, the support structure may be a load-bearing member of the wing. In other words, the support structure may be a part of the load-bearing or load-supporting structure of the wing. Preferably, the support structure is a rib arranged within the wing. Preferably, the support structure is a rib which at least partially defines and/or is arranged in a wingbox of the wing. The support structure, e.g., the rib, may be configured to reinforce the wing or wingbox. The rib may interconnect a front spar and a rear spar of the wing. The support structure may extend in a chordwise direction of the wing.

Preferably, the battery assembly is configured to be arranged, preferably completely, within a wingbox of the wing. Preferably, the wingbox is at least partially defined by a front spar, a rear spar, an upper skin and a lower skin of the wing.

Preferably, the battery assembly is configured such that the battery module is mountable to one side of the support structure and at least a second battery module is mountable to a second side of the support structure which is substantially opposite from the first side. The second battery module may or may not be considered to be a part of the battery assembly described herein. The first battery module and the second battery module may be similar or identical.

According to the presently claimed invention, the battery assembly is configured such that the mounting side extends substantially perpendicular to a spanwise direction of the wing and/or substantially perpendicular to a front spar and/or substantially perpendicular to a rear spar of the wing/wingbox, when the battery assembly is mounted within the wing. This may orientate the mounting side substantially perpendicular to a primary load path direction of the wing loads. This will maximize the ability to decouple the main wing loads, e.g., bending and torsion, from the battery module(s).

Preferably, the battery assembly further includes at least one thermal management system configured to at least partially influence at least one temperature of the battery module, preferably the battery cell(s). The thermal management system may be configured to provide heating and/or cooling to the battery module, preferably the battery cell(s). Thus, the thermal management system may provide thermal management to the battery module(s)/battery cell(s), e.g., to ensure that the battery module(s)/battery cell(s) have the appropriate and/or desired temperature(s) in the respective operating situation(s). The thermal management system may particularly condition the battery to work in the best operational limit.

The thermal management system may include at least one controller configured to control one of more functions of the thermal management system. The thermal management system may include one or more temperature sensors, e.g., one of more thermocouples, configured to sense one or more temperatures of the battery module, e.g., within or at the battery module or at the battery cell(s), and/or of a working medium, e.g., a liquid, for transferring heat from and/or to the battery module, within the thermal management system. The thermal management system may also include at least one chiller and/or at least one pump for conveying the working medium.

The thermal management system may be configured to transmit data based on the sensed temperature(s) to the controller. Based on the data, the controller may be configured to trigger and/or alter one or more functions of the thermal management system, e.g., by controlling a pump, e.g., to increase or decrease a flow of the working medium, and/or by controlling the chiller.

One or more components of the thermal management system, e.g., the controller, may be housed within the battery module, e.g., within a housing of the battery module. The thermal management controller may be attached to the housing, e.g., to an inner or outer surface thereon, and/or arranged within the housing.

At least a section of the thermal management system may be configured to engage and/or interface, preferably from underneath the wing, with ground support equipment, e.g., during maintenance, charging, etc.

The thermal management system may be configured to ensure that the temperature of the battery cell(s) is maintained within a range of 20°C to 45°C. For instance, when the temperature of the battery cell(s) exceeds 45°C, the thermal management system may be configured to activate and/or provide cooling to the cell(s). This may be achieved by circulating a working medium, e.g., a working fluid, often referred to as a coolant, to remove heat from the battery cell(s). The working medium may absorb heat from the cell(s) and transfer the heat to one or more heat exchangers. The heat exchanger(s) then may facilitate the exchange of heat between the working medium and an environment, effectively dissipating the heat to the environment, e.g., surrounding air. If there is a need for cabin heating, the thermal management system may be configured to transfer at least some of the heat absorbed from the cell(s) to the cabin.

When the temperature of the battery cell(s) drops below 20°C, the thermal management system may be configured to activate or provide heating to the cell(s). In this case, the thermal management system may facilitate the transfer of heat from the working medium to the battery cell(s). In this case, the working medium may act as a heat source, increasing the temperature of the battery cell(s) to the desired level.

The working medium may be any fluid. Preferably, the working medium is a dielectric liquid. This may be advantageous, since in the case of a leak of the working medium the chance of an electric short circuit may be prevented.

The battery module may comprise at least one inlet connector and at least one outlet connector for introducing and discharging the working medium, respectively.

Preferably, the thermal management system includes at least one compartment which includes at least one channel configured to guide at least one working medium therethrough to transfer heat to and/or from the battery module. The compartment may be configured as a plate heat exchanger. The compartment may be arranged within the battery module, in particular within a housing of the battery module.

Preferably, the compartment is at least partially integrated in or with the support structure, e.g., the rib, e.g., such as by embedding the compartment inside the rib or by having the rib forming the compartment. In this case, the support structure, e.g., the rib, may be considered to be a part of the battery assembly.

Configuring the support structure such that the compartment is at least partially integrated therein may allow the compartment to be integrated into the load supporting structure of the wing. In other words, the compartment may become part of or may be a structural member, i.e., a load-bearing member, of the airframe. This may save space, resulting in a more compact construction. Moreover, this may reduce the weight of the overall construction. Moreover, this may allow at least two battery modules to share one compartment/plate heat exchanger, e.g., by connecting the battery modules to opposite sides of the compartment/plate heat exchanger via the mounting structure. This may reduce the total number of components and may save space and/or reduce the weight of the construction.

Preferably, the thermal management system is configured to control at least one temperature of a plurality of battery modules mounted within the wing. The plurality of battery modules may be fluidically, i.e., via one or more pipes conveying the working medium, and/or thermodynamically connected in series via the thermal management system.

According to the presently claimed invention, the battery assembly includes a plurality of the at least one battery module. The plurality of battery modules are mountable in series within the wing, preferably along a spanwise direction of the wing. At least two adjacent battery modules of the plurality of battery modules are mechanically decoupled from each other at least along the second side of the battery modules, preferably along each side of the battery modules. Preferably, the at least two adjacent battery modules of the plurality of battery modules which are mechanically decoupled from each other at least along the second side of the battery modules may be mountable or mounted to a plurality of support structures, i.e., a first battery module of the two adjacent battery modules may be mounted to a first support structure and a second battery module of the two adjacent battery modules may be mounted to a second support structure which is different from the first support structure. The second support structure may be adjacent to the first support structure. A gap may be provided between the first support structure and the second support structure, the gap being configured, e.g., sized, to allow the two adjacent battery modules to be received therein and attached to the respective support structure.

The battery modules may be electrically and/or fluidically interconnected, i.e., via one or more pipes conveying a working medium for cooling and/or heating the battery modules, preferably in series and/or parallel.

Preferably, each of the plurality of battery modules is individually mountable within the wing.

Preferably, the battery module includes at least one housing which at least partially, preferably completely, encompasses the battery cell(s). Preferably, a single housing at least partially covers the battery module. The housing may include one or more openings, e.g., for supplying a working medium into the battery module for cooling and/or heating the battery module. The housing may include a plurality of components which may be assembled, e.g., to form a single coherent housing.

The battery module may include one or more separation elements, e.g., one or more plates, arranged within the battery module, e.g., within a housing of the battery module. This may allow a plurality of segments or compartments to be provided within the battery module. This may prevent and/or at least reduce, e.g., slow down, cross-influence between the segments or compartments, e.g., during thermal runaway, and/or may provide a define gas path, e.g., between the segments/compartments, e.g., via one or more openings provided in the one or more separation elements. The one or more separation elements may include one or more openings to interconnect the segments/compartments.

The housing may include at least one shell and at least one lid. The housing may be made of a least one metal and/or one or more fiber composite materials.

Preferably, the housing is configured to house a plurality of further components of the battery module, e.g., at least one encapsulation material, at least one cooling means/device, etc.

Preferably, the battery assembly further includes at least one venting device configured to vent at least one medium, e.g., at least one gas and/or at least one liquid, within the housing to an environment outside the housing. This may allow, e.g., gas during thermal runaway to exit the battery module. This may reduce a pressure within the battery module, e.g., to avoid an overpressure in the battery module and/or to avoid a mechanical failure of one or more components of the battery module.

Preferably, each battery module includes at least one electronic battery management device. The electronic battery management device may be configured to monitor one of more functions and/or one or more states of the battery module, in particular the battery cells, e.g., by protecting the battery from operating outside its safe operating area, calculating data, reporting data, controlling its environment, etc. The electronic battery management device may be attached to a housing of the battery module, e.g., to an inner surface and/or an outer surface of the housing of the battery module, and/or may be arranged within the housing.

Preferably, the battery assembly further includes at least one encapsulation device configured to at least partially encapsulate the battery cell(s). Preferably, the encapsulation device is at least partially, preferably completely, made of at least one foam material. The encapsulation device may be made of or may include at least one porous and/or spongy material, e.g., at least foam, preferably a polymer foam, preferably a closed-cell polymer foam. The encapsulation device, e.g., the foam, may be configured to expand after being installed/inserted in the battery module. The encapsulation device may mechanically lock the cells in place while also damping vibrations and mitigating thermal propagation from adjacent cells. The material of the encapsulation device, e.g., the foam, may include at least one flame retardant. Preferably, the material of the encapsulation device may be coated and/or impregnated with at least one flame retardant.

Preferably, the battery module is configured as a single coherent unit. This may allow the battery module to be assembled and transported as a single coherent unit or box prior to installing the battery module in the wing. This may facilitate the handling, transport and/or installation of the battery module.

Preferably, the second side of the battery module:
faces in a direction towards a wing tip of the wing, when the battery assembly is in a mounted state within the wing;
   and/or
faces in a direction towards a fuselage of the aircraft, when the battery assembly is in a mounted state within the wing. This may achieve a decoupling of the battery module from a load path of the wing along a (span-wise) length of the wing.

The second faces of adjacent battery modules may face in opposite directions.

The present invention allows the size of the battery modules to be relatively small compared to known modules. This is particularly beneficial, e.g., in that is improves maintenance and reduces costs. E.g., if a single battery cell is defective, smaller modules mean that fewer cells in total are replaced

The object mentioned at the beginning is also solved by a wing of an aircraft. The features, embodiments, and advantages described above with respect to the battery assembly apply to the wing accordingly.

The wing includes at least one battery assembly according to any of the embodiments described herein. The battery assembly may be mounted, by means of the mounting structure along a mounting side of the battery module, to at least one support structure of the wing within the wing. The wing's at least one support structure may be oriented in a front-rear direction, seen in direction of flight and/or generally perpendicularly with regard to the wing's longitudinal axis.

The battery assembly includes at least one mounting structure which mounts the battery module, along a mounting side of the battery module, to at least one support structure within the wing. The battery assembly is free of a mounting structure for mounting the battery module along a second side of the battery module, the second side being substantially opposite from the mounting side.

Preferably, the wing further includes at least one access device configured to provide at least partial access to the battery module and/or the mounting structure from outside of the wing. The access device may allow human access and/or access via a machine/tool, e.g., ground support equipment. The access device may include at least one opening providing in at least a section of the wing, e.g., along an underside of the wing. The access device may further include at least one cover configured to at least partially cover the opening. The cover may be at least partially removable from the opening.

Preferably, the access device is configured to provide at least partial access to the battery module and/or the mounting structure from an underside of the wing.

Preferably, the access device is configured to provide at least partial access to the battery module and/or the mounting structure such that the battery module(s) can be dismounted from the support structure and/or mounted to the support structure.

The object mentioned at the beginning is also solved by an aircraft. The features, embodiments, and advantages described above with respect to the battery assembly apply to the aircraft accordingly.

The aircraft includes at least one wing according to any of the embodiments described herein.

Preferably, the aircraft further includes at least one propeller or rotor and at least one electric drive motor configured to drive the propeller or rotor. The battery module may be configured to power the electric drive motor.

Preferably, the aircraft further includes a fuselage. The wing may be mounted higher than the fuselage, preferably at least when the aircraft is in a horizontal rest position.

Preferably, the aircraft is configured as a single-propeller or single-rotor aircraft.

Preferably, the aircraft further includes at least one access device configured to provide at least partial access to the battery module and/or the mounting structure from outside of the wing.

Preferably, the access device is configured to provide at least partial access to the battery module and/or the mounting structure from an underside of the wing.

Preferably, the access device is configured to provide at least partial access to the battery module and/or the mounting structure such that the battery module can be dismounted from the support structure and/or mounted to the support structure.

The object mentioned at the beginning is also solved by a method for installing at least one battery assembly, preferably at least one battery assembly according to any of embodiments described herein, within at least one wing of an aircraft, according to appended claim 15. The features, embodiments, and advantages described above with respect to the battery assembly apply to the method accordingly.

The battery assembly includes a plurality of battery modules each including at least one battery cell and at least one mounting structure.

The method includes mounting, by means of the mounting structure, the battery module, along a mounting side of the battery module, to at least one support structure within the wing.

The battery assembly is not mounted along a second side of the battery module, the second side being substantially opposite from the mounting side.

Various exemplary embodiments of the present disclosure disclosed herein are directed to providing features that will become readily apparent by reference to the following description when taken in conjunction with the accompanying drawings. In accordance with various embodiments, exemplary devices are disclosed herein. It is understood, however, that these embodiments are presented by way of example and not limitation, and it will be apparent to those of ordinary skill in the art who read the present disclosure that various modifications to the disclosed embodiments can be made, the scope of protection being defined by the appended claims.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

Embodiments of the present invention are further elucidated below with reference to the figures. The figures are schematic drawings and as such may not show all details of the systems and their components. Particularly, the drawings are not necessarily to scale and the shown dimensions are only exemplary and may vary. The drawings illustrate exemplary embodiments to provide a thorough understanding of the present invention. The drawings are not intended to limit the scope of the invention, which is defined by the appended claims.
- Fig. 1: shows, in a schematic perspective view, an aircraft according to an embodiment of the present invention;
- Fig. 2: shows, in a schematic cross-sectional top view, a wing of the aircraft of Fig. 1 according to an embodiment of the present invention;
- Fig. 3: shows, in a schematic cross-sectional bottom view, the wing of Fig. 2;
- Fig. 4: shows, in a schematic cross-sectional side view, the wing of Figs. 2 and 3;
- Fig. 5: shows, in a schematic perspective view, a battery assembly according to an embodiment of the present invention;
- Fig. 6: shows, in a schematic exploded view, the battery assembly of Fig. 5;
- Fig. 7: shows, in a schematic side view, the battery assembly of Figs. 5 and 6;
- Fig. 8: shows, in a schematic side view, a modification of the battery assembly of Figs. 5 to 7;
- Fig. 9: shows, in a schematic exploded view, a battery module of any of the battery assemblies of Figs. 5 to 8;
- Fig. 10: shows, in a further schematic exploded view, the battery module of Fig. 9;
- Fig. 11: shows, in a further schematic exploded view, the battery module of Figs. 9 and 10.

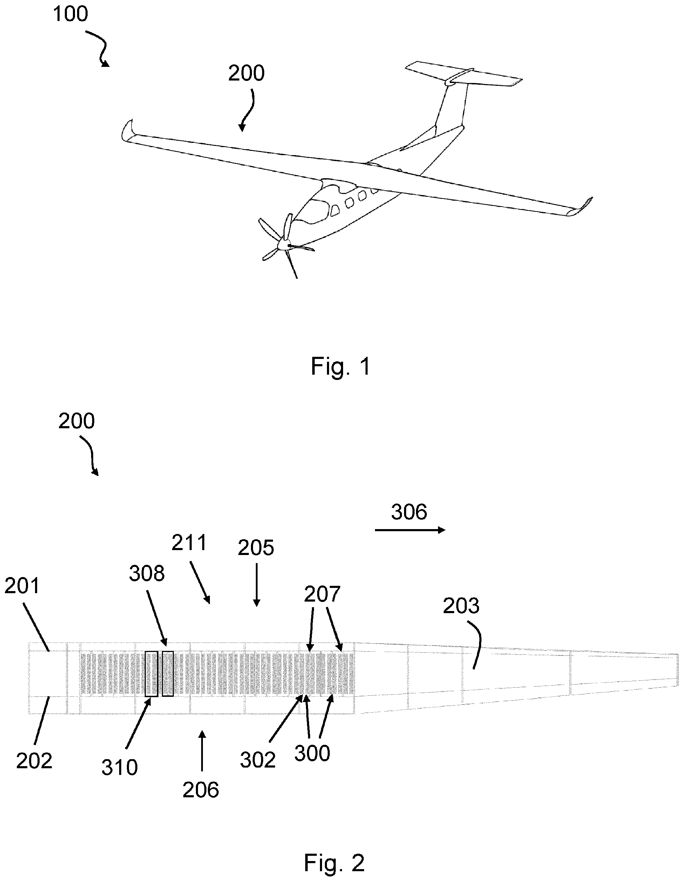

In general, many of the Figs. show a plurality of one or more certain elements. However, for the sake of clarity, not all of the elements shown in the Figs. have been indicated by a reference sign. Fig. 1 shows, in a schematic cross-sectional top view, an aircraft 100 according to an embodiment of the present invention. The aircraft 100 includes at least one wing 200, which is preferably configured as a wing with a relatively high aspect ratio which may result in relatively low induced and profile drag. The aircraft 100 may be configured as a battery-driven fully or partially electric aircraft. At least partially replacing a liquid-fuel based propulsion system by a battery-based electric propulsion system may reduce the number of moving parts, maintenance burden and therefore operating costs.

The aircraft 100 may include one or more propellers, e.g., a single configuration or twin configuration. Preferably, the aircraft 100 includes a minimum number of propellers, as few as possible, which may enable higher aerodynamic efficiencies.

The aircraft 100 may include a lightweight airframe and one or more batteries mounted in the wing 200 with a relatively high integration factor. The installation of batteries in a wing of an aircraft may provide an intrinsic separation between the batteries and cabin which may alleviate challenges relating to passenger safety against high-energy battery failure events. The use of a high-wing configuration, i.e., a wing mounted higher than the fuselage, may also be advantageous, in particular during a belly-landing event, e.g., in the event of landing gear failure.

A combination of a high aerodynamic efficiency and low airframe mass may achieve a high overall efficiency which may at least partially offset the relatively low energy density of battery cells to increase the range and/or power and/or efficiency of the aircraft 100.

Preferably, the aircraft 100 is configured to emit no greenhouse gases to provide a substantially cleaner way of flying, in particular short ranges, compared to the operation by fossil-fuel based aircraft.

Fig. 2 shows further details of the wing 200 of the aircraft 100. The wing 200 may include a front spar 201, a rear spar 202, an upper skin 203, and a lower skin 204, which together may define a wingbox 211. The wing 200 may also include a wing leading edge 205 and a wing trailing edge 206. The wingbox 211, which may be defined by the front spar 201, the rear spar 202, the upper skin 203, and the lower skin 204, may be arranged between the wing leading edge 205 and the wing trailing edge 206.

The wing 200 includes at least one support structure 207 which may interconnect the front spar 201 and the rear spar 202. The support structure 207 may be configured as a rib. Here, the support structure 207 is oriented in a front-rear direction, seen in direction of flight and generally perpendicularly with regard to the wing's longitudinal axis. The wing 200 in Fig. 2 includes a plurality of support structures 207, e.g., ribs. However, not all of the support structures 207 are indicated by a reference sign in the Figs. for greater clarity.

One or more battery assemblies 300 may be mounted to the support structure(s) 207 within the wing 200. As shown in Fig. 2, a plurality of battery assemblies 300 may be provided of which only two battery assemblies 300 have been indicated by references signs in exemplary manner. The further battery assemblies 300 have not been indicated by reference signs in the Figs. for greater clarity.

Each battery assembly 300 includes a plurality of battery modules 302. As shown in Fig. 2, the battery modules 302 are mounted to the support structures 207 within the wing by at least one mounting structure, e.g., by means of at least one screw or clip, along a mounting side. A face or side, in particular according to the presently claimed invention only one face or side, of each battery module 302 is mounted to a face or side of each support structure 207 by the mounting structure.

The battery modules 302 are not mounted along a second side of the battery modules 302, the second side being substantially opposite from the mounting side, as shown in Fig. 2. The battery modules 302 may be aligned with and/or may extend along the support structures 207. According to the presently claimed invention, the battery modules 302, in particular the mounting sides of the battery modules 302, extend substantially perpendicular to a spanwise direction 306 of the wing 200 and/or substantially perpendicular to the front spar 201 and/or substantially perpendicular to the rear spar 202 of the wing 200.

A pair of adjacent battery modules 302 may be mounted to one support structure 207, i.e., one common support structure 207, particularly to opposite sides of said common support structure 207. Such an assembly is indicated by the reference sign 308 in Fig. 2. Moreover, a pair of adjacent battery modules 302 may be mounted to separate support structures 207, i.e., to two adjacent support structures 207. Such an assembly is indicated by the reference sign 310 in Fig. 2. As shown in Fig. 2, the battery modules 302 of the assembly 310 are not connected to each other via a common interface. In fact, there may be a gap, e.g., a gap of air, between the battery modules 302 of the assembly 310.

The configuration shown in Fig. 2 allows, according to the presently claimed invention, the battery modules 302, i.e., at least two battery modules, to be arranged in series, in particular along the spanwise direction 306, within the wing 200, without structurally coupling adjacent battery modules 302 to each other via a common interface. In other words, a structural "break", e.g., a gap of space, preferably a plurality of "breaks", may be provided along the series of battery modules 302 due to the lack of mechanical connection at the second side of the battery modules 302. This may reduce one or more adverse effects and/or interference of the battery modules 302 to the wing 200, e.g., in respect to deformation, e.g., bending, of the wing 200 during operation of the aircraft 100 caused by one or more loads, e.g., one or more aerodynamic loads. Moreover, this may reduce an impact of one or more wing loads on the battery modules 302. This may be advantageous as it may allow a simpler path towards certification, e.g., by not needing to demonstrate safety of load-bearing batteries in case of battery failure, e.g., a thermal runaway event.

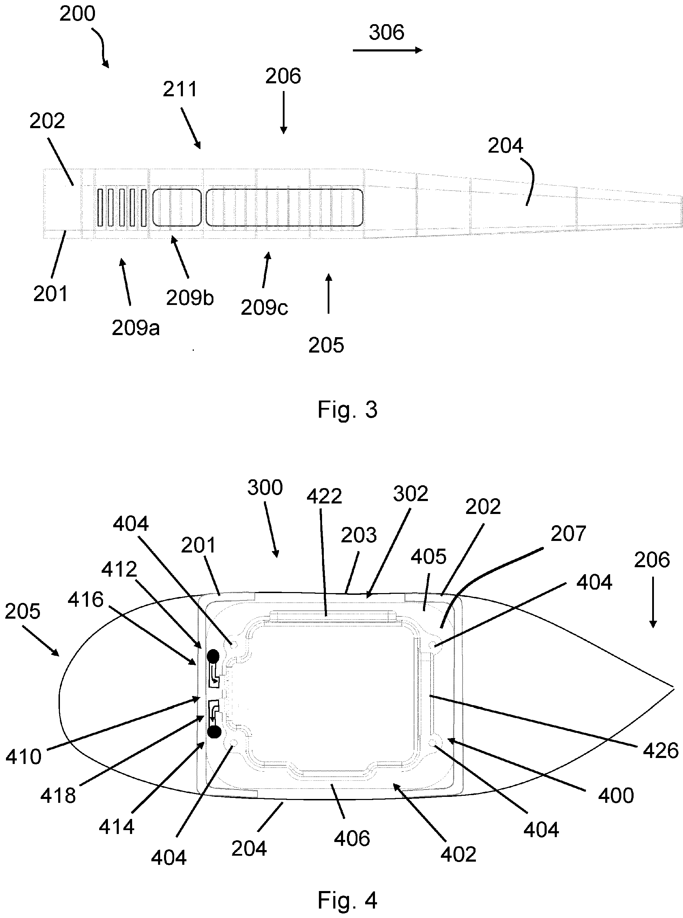

Fig. 3 shows, in a schematic cross-sectional bottom view, the wing 200 of Fig. 2. As shown in Fig. 2, one or more access devices 209 may be provided in or on the upper skin 203 and/or the lower skin 204 of the wing 200. The access devices 209 may be used for insertion, access and/or removal of the battery modules 302. The access devices 209 may include one or more openings defined in the upper skin 203 and/or the lower skin 204. The access devices 209 may include one or more covers for at least partially covering the openings, when access through the openings is not desired and/or not required.

The access devices 209 provide one or more openings in the skin of the wing and as well as one or more covers to close the opening. It may further can transfer structural loads, e.g., bending and twisting wing loads. In one configuration, the opening can be reinforced on its edge by means of additional structural thickness or a "doubler plate", allowing structural loads to flow around the cover and thereby making the cover non-load bearing. An alternative preferred configuration is to reinforce the cover with stiffeners to make the cover load-bearing. A combination of these two configurations is also conceivable.

Fig. 4 shows a schematic cross-sectional side view of the wing 200 of Figs. 2 and 3. Fig. 4 shows the mounting structure 400 configured to mount the battery modules 302, along a mounting side 402 of each battery module 302, to the respective support structure 207 within the wing 200. The mounting structure 400 may include one or more connecting elements 404, e.g., one or more holes configured to receive one or more screws, one or more rivets, one or more clips, etc. For instance, the mounting structure may include at least one flange 405 which provides one or more means for attaching the battery module 302 to the support structure 207. The flange 405 may include one or more holes configured to receive and/or engage with the connecting elements 404, e.g., the one or more screws.

The battery modules 302 is not mounted along a second side of the battery modules 302, the second side being substantially opposite from the mounting side, as shown in Fig. 2. Preferably, the battery assembly 300 further includes at least one venting device 406 configured to vent at least one medium, e.g., at least one gas and/or at least one liquid, within the battery module 302 to an environment outside the battery module 302. This may allow, e.g., gas during thermal runaway to exit the battery module 302. The vent 406 may include an over-pressure relief valve, a burst valve, or the like. The pressure relief valve may be mounted on the wall of the shell or tub (452) while also extending into the venting device 406. The venting device (406) may basically serve as passage to the actual pressure relief valve.

The battery assembly 300 may further include at least one thermal management system 410 configured to at least partially control at least one temperature of the battery module 302, preferably the battery cell(s). The thermal management system 410 may be configured to introduce and/or discharge a working medium, e.g., a liquid, into and/or from the battery module 302, e.g., via at least one working medium inlet 412 and/or at least one working medium outlet 414, to heat and/or cool the battery module 302, preferably the battery cell(s) via the working medium. The working medium inlet 412 and the working medium outlet 414 may each include at least one tube 416, 418 for guiding the working medium into and/or out of the battery module 302, respectively.

The battery assembly 300 may further include at least one electronic battery management device 422. The battery management device 422 may be configured to monitor one of more functions and/or one or more states of the battery module 302, in particular the battery cell(s), e.g., by protecting the battery module 302/battery cell(s) from operating outside its safe operating area, calculating data, reporting data, controlling its environment, etc. The electronic battery management device 422 may be attached to an outer surface and/or an inner surface of the battery module 302, e.g., to an inner surface and/or an outer surface of a housing of the battery module 302, and/or may be arranged within the battery module 302, e.g., within a housing of the battery module 302. Each battery module 302 may have its own designated electronic battery management device 422. Alternatively, one electronic battery management device 422 may be provided to manage a plurality of battery modules 302.

The battery assembly 300 may further a power electronics device 426. The power electronics device 426 may be attached to an outer surface and/or an inner surface of the battery module 302, e.g., to an inner surface and/or an outer surface of a housing of the battery module 302, and/or may be arranged within the battery module 302, e.g., within a housing of the battery module 302. Each battery module 302 may have its own designated power electronics device 426. Alternatively, one power electronics device 426 may be associated and/or designated for a plurality of battery modules 302.

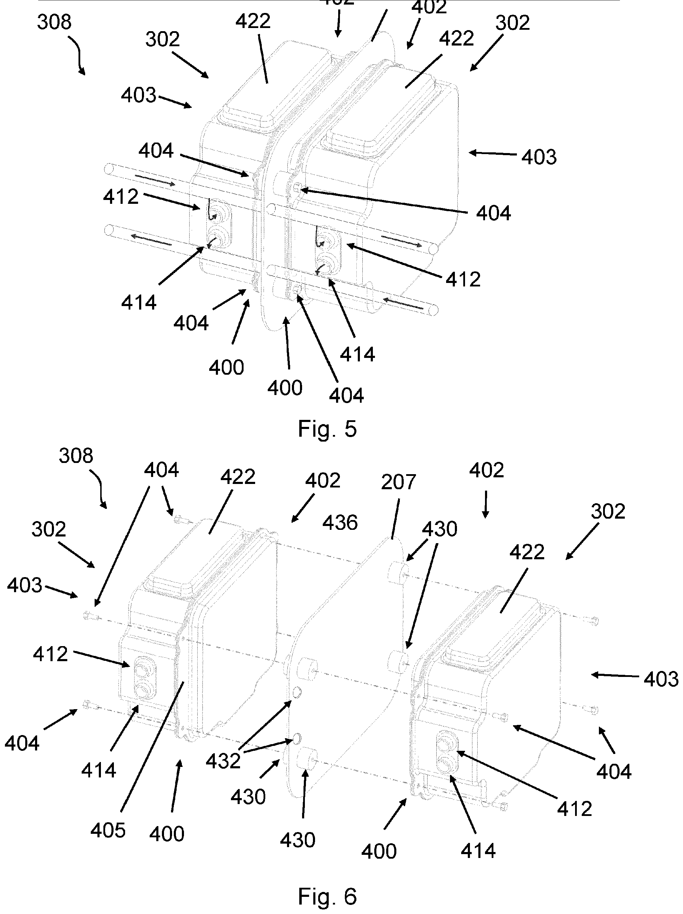

Figs. 5 to 8 schematically show two battery modules 302 mounted to a support structure 207. Hence, the assembly shown in Fig. 5 may correspond to the assembly 308 shown in Fig. 2. The battery modules 302 are each mounted, along the mounting side 402 of the battery module 302, to the support structure 207 within the wing 200 by means of the mounting structure 400. The battery assembly 300 is free of a mounting structure for mounting the respective battery module 302 along a second side 403 of the battery module 302, the second side 403 being substantially opposite from the mounting side 402.

The support structure 207 may include one or more attachment elements 430 for mounting the battery modules 302 to the support structure 207. For instance, the attachment elements 430 may include a screw thread for engaging with screw threads of the connecting elements 404 to secure the battery modules 302 to the support structure 207.

The support structure 207 may include one or more through-holes 432 for receiving one or more tubes configured to guide the working medium therethrough.

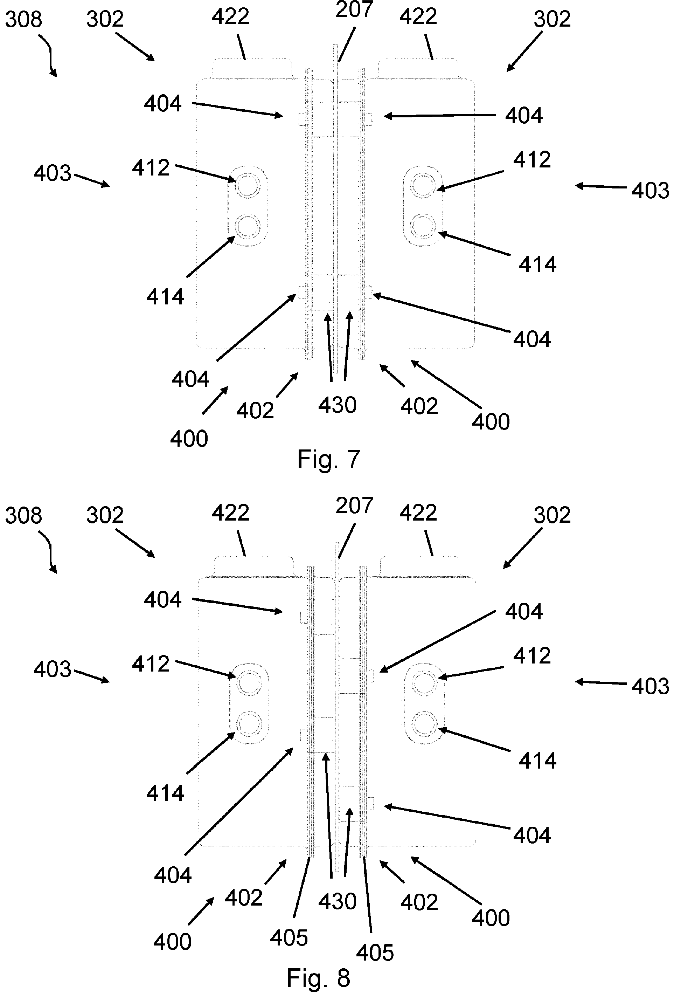

Fig. 8 shows a modification of the embodiment shown in Fig. 7 in that the connecting elements 404, and the corresponding holes defined in the flange 405, are arranged in a staggered manner.

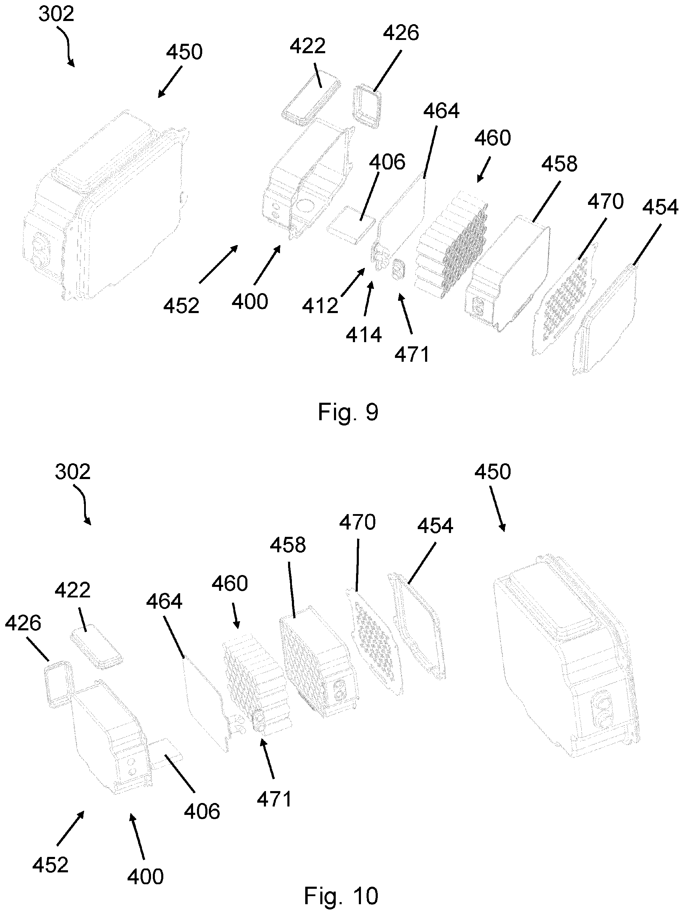

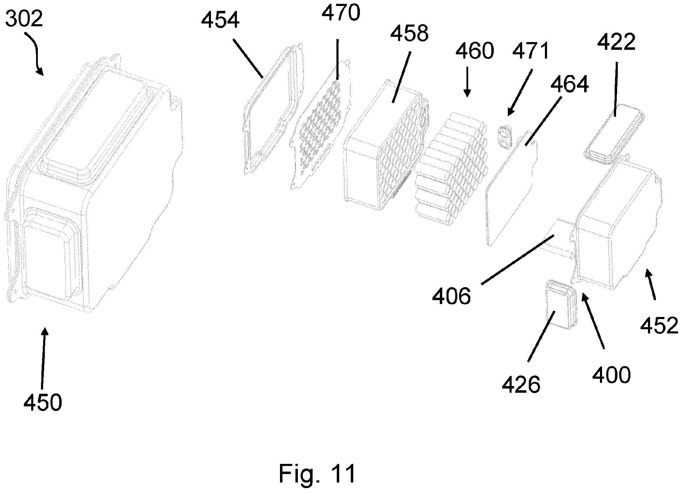

Figs. 9 to 11 show schematic exploded views of the battery module 302. The battery module 302 may include a housing 450 which may include a shell or tub 452 and hermetic lid 454. The housing 450 may house one of more components of the battery module 302.

As shown in Figs. 9 to 11, the battery module 302 may include a plurality of battery cells 460 housed within the housing 450 and arranged electrically in series and/or parallel together. The battery module 302 may represent either the full system voltage or partial system voltage and the battery module 302 may be installed individually and/or separately in the wing 200. In the case that the battery module voltage is only a fraction of the full system voltage, i.e., a pack level which is defined as this full system voltage, multiple battery modules 302 may be electrically connected in-series inside the wing 200.

The exemplary battery cells 460 in this preferred embodiment are cylindrical and oriented in a generally spanwise direction. In particular, the longitudinal axis of the cells generally faces towards the wing tip.

At least one encapsulation device 458 may be provided. The encapsulation device 458 may be configured to at least partially encapsulate the battery cells 460. The encapsulation device 458 may be at least partially, preferably completely, made of at least one foam material.

Moreover, a compartment 464, as a component of the thermal management system 410, may be provided which may include at least one channel configured to guide the working medium therethrough to transfer heat to and/or from the battery module(s) 302. The compartment 464 may be configured as a plate heat exchanger.

The compartment 464 may be constructed from one or more materials that are relatively lightweight with a low overall thickness with internal mechanical supports to prevent distortion and buckling. The compartment 464 may be electrically non-conductive at an interface to the cells 460, e.g., at least one outer face onto which the lower bottom face of the battery cells 464 will contact. The compartment 464 may be adequately thermally conductive at an interface to the cells 460 to facilitate transferring heat to and/or from the cells 460. The compartment 464 may be sufficiently robust against material ejected in the direction of the compartment 464, e.g., in the event of thermal runaway. For example, the compartment 464 may be made of aluminium with electrical insulation or thermoplastic composites.

As shown in the Figs, the compartment 464 may be housed within the battery module 302, e.g., within the housing 450. The location of the compartment 464 within the battery modules 302 may be varied. For example, the compartment 464 may be arranged between the cells 460 and the shell or tub 452, i.e., at the floor or bottom of the shell or tub 452. As an exemplary alternative, the compartment 464 may be arranged along the sides or lengths of the cells 460, e.g., along a side wall of the shell or tub 452.

Alternatively, the compartment 464 may be least partially integrated in the support structure 207, e.g., the rib 207.

Moreover, one or more separation or cover elements 470, e.g., one or more thermomechanical covers 470, may be provided, e.g., within the housing 450.

Furthermore, an adapter 471 for connecting the compartment 464 may be provided.

The construction of the battery module 302 may serve to electrically connect the cells 460 into the desired electrical system architecture, e.g., with respect to voltage, capacity, etc. Moreover, the battery module 302 may thermally insulate and/or condition the cells 460. Moreover, the battery module 302 may provide thermal and/or ballistic safeguard for the host airframe, e.g., in the event of thermal runaway.

The venting device 406 may be installed within the shell or tub 452 via adhesive bonding, optionally with a flame retardant, and/or mechanical fastening.

The battery cells 460 may then be inserted into the shell or tub 452, e.g., via a cell placement jig which controls the spacing tolerance of the cells 460. The cells 460 may be initially fixed to the compartment 464 via a thermally conductive adhesive.

The battery cells 460 may then be electrically connected together with metallic interconnects via means such as welding, soldering, etc. in the desired cell connectivity scheme as determined by the number of parallel cells 460 in a supercell and the number of supercells in series. This welding is performed either in the same jig in which the battery cells 460 were installed or in a different jig.

The encapsulation device 458, e.g., the encapsulation foam, may then be inserted in the spaces between the cells 460 for thermal insulation and protection and to secure the cells 460 into position. This encapsulation device 458 may include a flame retardant, closed-cell, polymer foam which expands after insertion. The low-density foam may mechanically lock the cells 460 in place while also damping vibrations and mitigating thermal propagation from adjacent cells 460. Alternatively, a flame- retardant foam may be machined and place around the cells 460 prior to the mechanical attachment of the metallic interconnects.

An intermediate thermomechanical cover 470 may then be placed on the top of the shell or tub 452 and bonded via an adhesive, optionally with flame retardant, or mechanical fastening. Alternatively, the cover 470 may be inserted prior to the encapsulation device 458, as the intermediate cover 470 may have sufficiently large holes defined in it that serve as a baffle plate, e.g., during thermal runaway. As the cover 470 may experience the brunt of the heat and ejecta during thermal runaway, it may be made of higher temperature capable polymers (e.g., phenolic, PEEK, polyimide, etc.) reinforced with carbon or oxide fibers, a metal of sufficient thickness (e.g. Al, Ti, etc.), or a ceramic matrix composite (e.g., carbon, alumina, silica, mullite, and SiC fibers reinforced with a matrix of C, SiC, SiOC, and mullite).

The thermomechanical cover 470 is preferably placed directly over the cells to provide a barrier against heat and mass ejecta. The thermomechanical cover 470 may be provided with holes, cutaways, or other openings which are aligned with and located over the gaps between the cells. This allows hot gas to pass through and avoids or at least reduces pressure to build in this region.

The thermomechanical cover 470 may be preferably used in conjunction with the provision of an open cell foam (preferably polymer) provided directly over the thermomechanical cover 407 which may cause a more diffusive flow, e.g., by slowing down the gas through redirection. This may further protect the hermetic lid from the hot gas and flame.

An over-pressure relief valve, a burst valve, or the like (not shown) may be provided to from a point of lowest pressure to allow the hot gas to leave the system.

The hermetic lid 454, which may be made from either metallic or fiber composite materials, may close the battery module 302 by being placed on the top of the cover 470 and bonded via an adhesive, optionally with flame retardant, or mechanical fastening. An insulative, flame retardant open cell foam may optionally be installed between the cover 470 and the lid 454. The lid 454 may additionally have one or more layers of protection on an inner surface to protect the structure from hot thermal runaway gasses that pass through the cover 470. This layer of protection may include a coating or veil that is flame retardant, low conductivity, and/or intumescent.

## Claims

1. A battery assembly (300) configured to be mounted within a wing (200) of an aircraft (100), including:
at least one battery module (302) which includes at least one battery cell (460);
at least one mounting structure (400) configured to mount the battery module (302), along a mounting side (402) of the battery module (302), to at least one support structure (207) within the wing (200);
wherein the battery assembly (300) is free of a mounting structure for mounting the battery module (302) along a second side (403) of the battery module (302), the second side (403) being substantially opposite from the mounting side (402);
wherein the battery assembly (300) includes a plurality of the at least one battery module (302), wherein the plurality of battery modules (302) are mountable in series within the wing (200), wherein at least two adjacent battery modules (302) of the plurality of battery modules (302) are mechanically decoupled from each other at least along the second side (403) of the battery modules (302);
wherein the battery assembly (300) is configured such that the mounting side (402) extends substantially perpendicular to a span-wise direction of the wing (200) and/or substantially perpendicular to a front spar (201) and/or substantially perpendicular to a rear spar (202) of the wing (200), when the battery assembly (300) is mounted within the wing (200).

2. The battery assembly (300) according to claim 1, wherein the support structure (207) is a rib arranged within the wing (200), preferably wherein the support structure (207) is a rib which at least partially defines a wingbox (211) of the wing (200), and wherein, preferably, the support structure (207) extends parallel to the mounting structure (400) and perpendicular to the span-wise direction.

3. The battery assembly (300) according to claim 1 or 2, wherein the battery assembly (300) is configured to be arranged within a wingbox (211) of the wing (200), preferably wherein the wingbox (211) is at least partially defined by the front spar (201), the rear spar (202), an upper skin (203) and a lower skin (204) of the wing (200).

4. The battery assembly (300) according to any of the preceding claims, wherein the battery assembly (300) is configured such that the battery module (302) is mountable to one side of the support structure (207) and at least a second battery module (302) is mountable to a second side of the support structure (207) which is substantially opposite from the first side.

5. The battery assembly (300) according to any of the preceding claims, further including at least one thermal management system (410) configured to at least partially control a temperature of at least a portion of the battery module (302), preferably of the battery cell (460), wherein the thermal management system (410) includes at least one compartment (464) which includes at least one channel configured to guide at least one working medium therethrough to transfer heat to and/or from the battery module (302).

6. The battery assembly (300) according to claim 5, wherein the compartment (464) is at least partially integrated in the support structure (207).

7. The battery assembly (300) according to any of the preceding claims, wherein the at least two adjacent battery modules (302) of the plurality of battery modules (302) are mechanically decoupled from each other along each side of the battery modules (302), preferably along each side of the battery modules (302) except for the mounting sides (402).

8. The battery assembly (300) according to any of the preceding claims, further including at least one encapsulation device (458) configured to at least partially encapsulate the battery cell(s) (460), preferably wherein the encapsulation device (458) is at least partially, preferably completely, made of at least one foam material.

9. The battery assembly (300) according to any of the preceding claims, further including a thermomechanical cover (470), preferably wherein the battery module (302) includes a housing (450) having a shell or tub (452) and a hermetic lid (454), wherein the thermomechanical cover (470) is placed on top of the shell or tub (452) and below the hermetic lid (454), further preferably with open cell foam being provided between the thermomechanical cover (470) and the hermetic lid (454).

10. The battery assembly (300) according to claim 9, wherein the thermomechanical cover is provided with one or more opening(s), preferably located above gaps between battery cells (460).

11. The battery assembly (300) according to any of the preceding claims, further comprising a venting device (406), particularly comprising an over-pressure relief valve or a burst valve, the venting device (406) being preferably installed within a shell or tub (452) of the battery module (302).

12. A wing (200) of an aircraft (100), including at least one battery assembly of any one of the preceding claims mounted within the wing (200).

13. An aircraft (100), including at least one wing (200) according to claim 12.

14. The aircraft (100) according to claim 13, further including at least one access device (209), preferably in the wing, configured to provide at least partial access to the battery module (302) and/or the mounting structure (400) from outside of the wing (200).

15. A method for installing at least one battery assembly (300), preferably the battery assembly (300) according to any of claims 1 to 11, within at least one wing (200) of an aircraft (100), the battery assembly (300) including at least one battery module (302) which includes at least one battery cell (460) and at least one mounting structure (400), the method including:
mounting, by means of the mounting structure (400), the battery module (302), along a mounting side (402) of the battery module (302), to at least one support structure (207) within the wing (200),
wherein the battery assembly (300) is not mounted along a second side (403) of the battery module (302), the second side (403) being substantially opposite from the mounting side (402),
wherein the battery assembly (300) includes a plurality of the at least one battery module (302), wherein the plurality of battery modules (302) are mounted in series within the wing (200), wherein at least two adjacent battery modules (302) of the plurality of battery modules (302) are mechanically decoupled from each other at least along the second side (403) of the battery modules (302),
wherein the mounting side (402) extends substantially perpendicular to a span-wise direction of the wing (200) and/or substantially perpendicular to a front spar (201) and/or substantially perpendicular to a rear spar (202) of the wing (200), when the battery assembly (300) is mounted within the wing (200).

## Patentansprüche

1. Batterieanordnung (300), die konfiguriert ist, in einem Flügel (200) eines Flugzeugs (100) montiert zu werden, aufweisend:
mindestens ein Batteriemodul (302), das mindestens eine Batteriezelle (460) aufweist;
mindestens eine Montagestruktur (400), die konfiguriert ist, das Batteriemodul (302) entlang einer Montageseite (402) des Batteriemoduls (302) an mindestens eine Trägerstruktur (207) in dem Flügel (200) zu montieren;
wobei die Batterieanordnung (300) ohne eine Montagestruktur zum Montieren des Batteriemoduls (302) entlang einer zweiten Seite (403) des Batteriemoduls (302) ist, wobei die zweite Seite (403) im Wesentlichen gegenüber der Montageseite (402) ist;
wobei die Batterieanordnung (300) mehrere des mindestens einen Batteriemoduls (302) aufweist, wobei die mehreren Batteriemodule (302) seriell in dem Flügel (200) montierbar sind, wobei mindestens zwei benachbarte Batteriemodule (302) der mehreren Batteriemodule (302) zumindest entlang der zweiten Seite (403) der Batteriemodule (302) mechanisch voneinander entkoppelt sind;
wobei die Batterieanordnung (300) derart konfiguriert ist, dass die Montageseite (402) sich im Wesentlichen senkrecht zu einer Spannweite-Richtung des Flügels (200) und/oder im Wesentlichen senkrecht zu einem vorderen Holm (201) und/oder im Wesentlichen senkrecht zu einem hinteren Holm (202) des Flügels (200) erstreckt, wenn die Batterieanordnung (300) in dem Flügel (200) montiert ist.

2. Batterieanordnung (300) nach Anspruch 1, wobei die Trägerstruktur (207) eine in dem Flügel (200) angeordnete Rippe ist, vorzugsweise wobei die Trägerstruktur (207) eine Rippe ist, die mindestens teilweise einen Flügelkasten (211) des Flügels (200) definiert, und vorzugsweise wobei die Trägerstruktur (207) sich parallel zu der Montagestruktur (400) und senkrecht zu der Spannweite-Richtung erstreckt.

3. Batterieanordnung (300) nach Anspruch 1 oder 2, wobei die Batterieanordnung (300) konfiguriert ist, in einem Flügelkasten (211) des Flügels (200) angeordnet zu werden, vorzugsweise wobei der Flügelkasten (211) mindestens teilweise von dem vorderen Holm (201), dem hinteren Holm (202), einer oberen Haut (203) und einer unteren Haut (204) des Flügels (200) definiert ist.

4. Batterieanordnung (300) nach einem der vorstehenden Ansprüche, wobei die Batterieanordnung (300) derart konfiguriert ist, dass das Batteriemodul (302) an einer Seite der Trägerstruktur (207) montierbar ist und mindestens ein zweites Batteriemodul (302) an einer der ersten Seite im Wesentlichen gegenüberliegenden zweiten Seite der Trägerstruktur (207) montierbar ist.

5. Batterieanordnung (300) nach einem der vorstehenden Ansprüche, ferner aufweisend mindestens ein Wärmemanagementsystem (410), das konfiguriert ist, eine Temperatur mindestens eines Teils des Batteriemoduls (302), vorzugsweise der Batteriezelle (460), mindestens teilweise zu steuern, wobei das Wärmemanagementsystem (410) mindestens eine Kammer (464) aufweist, die mindestens einen Kanal aufweist, der konfiguriert ist, mindestens ein Arbeitsmedium hindurchzuleiten, um Wärme zu und/oder aus dem Batteriemodul (302) zu transferieren.

6. Batterieanordnung (300) nach Anspruch 5, wobei die Kammer (464) mindestens teilweise in die Trägerstruktur (207) integriert ist.

7. Batterieanordnung (300) nach einem der vorstehenden Ansprüche, wobei die mindestens zwei benachbarten Batteriemodule (302) der mehreren Batteriemodule (302) entlang jeder Seite der Batteriemodule (302), vorzugsweise entlang jeder Seite der Batteriemodule (302) mit Ausnahme der Montageseiten (402), mechanisch voneinander entkoppelt sind.

8. Batterieanordnung (300) nach einem der vorstehenden Ansprüche, ferner aufweisend mindestens eine Einkapselungsvorrichtung (458), die konfiguriert ist, die Batteriezelle(n) (460) mindestens teilweise einzukapseln, vorzugsweise wobei die Einkapselungsvorrichtung (458) mindestens teilweise, vorzugsweise komplett, aus mindestens einem Schaumstoffmaterial hergestellt ist.

9. Batterieanordnung (300) nach einem der vorstehenden Ansprüche, ferner aufweisend eine thermomechanische Schutzhaube (470), vorzugsweise wobei das Batteriemodul (302) ein Gehäuse (450) mit einer Schale oder Wanne (452) und einem luftdichten Deckel (454) aufweist, wobei die thermomechanische Schutzhaube (470) oberhalb der Schale oder Wanne (452) und unterhalb des luftdichten Deckels (454) angeordnet ist, ferner vorzugsweise wobei ein offenzelliger Schaumstoff zwischen der thermomechanischen Schutzhaube (470) und dem luftdichten Deckel (454) bereitgestellt ist.

10. Batterieanordnung (300) nach Anspruch 9, wobei die thermomechanische Schutzhaube mit einer oder mehreren Öffnungen versehen ist, die vorzugsweise oberhalb von Zwischenräumen zwischen Batteriezellen (460) angeordnet sind.

11. Batterieanordnung (300) nach einem der vorstehenden Ansprüche, ferner aufweisend eine Lüftungsvorrichtung (406), insbesondere mit einem Überdruck-Entlastungsventil oder einem Sicherheitsventil, wobei die Lüftungsvorrichtung (406) vorzugsweise in einer Schale oder Wanne (452) des Batteriemoduls (302) installiert ist.

12. Flügel (200) eines Flugzeugs (100), aufweisend mindestens eine in dem Flügel (200) montierte Batterieanordnung nach einem der vorstehenden Ansprüche.

13. Flugzeug (100) aufweisend mindestens einen Flügel (200) nach Anspruch 12.

14. Flugzeug (100) nach Anspruch 13, ferner aufweisend mindestens eine Zugriffsvorrichtung (209), vorzugsweise in dem Flügel, die konfiguriert ist, mindestens teilweisen Zugriff auf das Batteriemodul (302) und/oder die Montagestruktur (400) von außerhalb des Flügels (200) bereitzustellen.

15. Verfahren zum Installieren mindestens einer Batterieanordnung (300), vorzugsweise der Batterieanordnung (300) nach einem der Ansprüche 1 bis 11, in mindestens einem Flügel (200) eines Flugzeugs (100), wobei die Batterieanordnung (300) mindestens ein Batteriemodul (302) aufweist, das mindestens eine Batteriezelle (460) und mindestens eine Montagestruktur (400) aufweist, wobei das Verfahren aufweist:
Montieren des Batteriemoduls (302) entlang einer Montageseite (402) des Batteriemoduls (302) an mindestens eine Trägerstruktur (207) in dem Flügel (200) mithilfe der Montagestruktur (400),
wobei die Batterieanordnung (300) entlang einer zweiten Seite (403) des Batteriemoduls (302) nicht montiert wird, wobei die zweite Seite (403) im Wesentlichen gegenüber der Montageseite (402) ist,
wobei die Batterieanordnung (300) mehrere des mindestens einen Batteriemoduls (302) aufweist, wobei die mehreren Batteriemodule (302) seriell in dem Flügel (200) montiert sind, wobei mindestens zwei benachbarte Batteriemodule (302) der mehreren Batteriemodule (302) zumindest entlang der zweiten Seite (403) der Batteriemodule (302) mechanisch voneinander entkoppelt sind,
wobei die Montageseite (402) sich im Wesentlichen senkrecht zu einer Spannweite-Richtung des Flügels (200) und/oder im Wesentlichen senkrecht zu einem vorderen Holm (201) und/oder im Wesentlichen senkrecht zu einem hinteren Holm (202) des Flügels (200) erstreckt, wenn die Batterieanordnung (300) in dem Flügel (200) montiert ist.

## Revendications

1. Ensemble batterie (300) configuré pour être monté à l'intérieur d'une aile (200) d'un aéronef (100), comprenant :
au moins un module de batterie (302) qui comprend au moins un élément de batterie (460) ;
au moins une structure de montage (400) configurée pour permettre de monter le module de batterie (302), le long d'un côté de montage (402) du module de batterie (302), sur au moins une structure de support (207) à l'intérieur de l'aile (200) ;
dans lequel l'ensemble batterie (300) est dépourvu de structure de montage pour permettre de monter le module de batterie (302) le long d'un deuxième côté (403) du module de batterie (302), le deuxième côté (403) étant sensiblement opposé au côté de montage (402) ;
dans lequel l'ensemble batterie (300) comprend une pluralité de l'au moins un module de batterie (302), dans lequel la pluralité de modules de batterie (302) peuvent être montés en série à l'intérieur de l'aile (200), dans lequel au moins deux modules de batterie (302) adjacents de la pluralité de modules de batterie (302) sont mécaniquement découplés l'un de l'autre au moins le long du deuxième côté (403) des modules de batterie (302) ;
dans lequel l'ensemble batterie (300) est configuré de sorte que le côté de montage (402) s'étend de manière sensiblement perpendiculaire dans une direction d'envergure de l'aile (200) et/ou de manière sensiblement perpendiculaire à un longeron avant (201) et/ou de manière sensiblement perpendiculaire à un longeron arrière (202) de l'aile (200), lorsque l'ensemble batterie (300) est monté à l'intérieur de l'aile (200).

2. Ensemble batterie (300) selon la revendication 1, dans lequel la structure de support (207) est une nervure agencée à l'intérieur de l'aile (200), de préférence dans lequel la structure de support (207) est une nervure qui définit, au moins partiellement, un caisson d'aile (211) de l'aile (200), et dans lequel, de préférence, la structure de support (207) s'étend parallèlement à la structure de montage (400) et perpendiculairement à la direction d'envergure.

3. Ensemble batterie (300) selon la revendication 1 ou 2, dans lequel l'ensemble batterie (300) est configuré pour être agencé à l'intérieur d'un caisson d'aile (211) de l'aile (200), de préférence dans lequel le caisson d'aile (211) est au moins partiellement défini par le longeron avant (201), le longeron arrière (202), une peau supérieure (203) et une peau inférieure (204) de l'aile (200).

4. Ensemble batterie (300) selon l'une quelconque des revendications précédentes, dans lequel l'ensemble batterie (300) est configuré de sorte que le module de batterie (302) peut être monté sur un côté de la structure de support (207) et au moins un deuxième module de batterie (302) peut être monté sur un deuxième côté de la structure de support (207) qui est sensiblement opposé au premier côté.

5. Ensemble batterie (300) selon l'une quelconque des revendications précédentes, comprenant en outre au moins un système de gestion thermique (410) configuré pour contrôler, au moins partiellement, une température d'au moins une partie du module de batterie (302), de préférence de l'élément de batterie (460), dans lequel le système de gestion thermique (410) comprend au moins un compartiment (464) qui comprend au moins un canal configuré pour guider au moins un fluide de travail à travers ce dernier afin de transférer la chaleur vers et/ou depuis le module de batterie (302).

6. Ensemble batterie (300) selon la revendication 5, dans lequel le compartiment (464) est au moins partiellement intégré dans la structure de support (207).

7. Ensemble batterie (300) selon l'une quelconque des revendications précédentes, dans lequel les au moins deux modules de batterie (302) adjacents de la pluralité de modules de batterie (302) sont mécaniquement découplés l'un de l'autre le long de chaque côté des modules de batterie (302), de préférence le long de chaque côté des modules de batterie (302), excepté pour les côtés de montage (402).

8. Ensemble batterie (300) selon l'une quelconque des revendications précédentes, comprenant en outre au moins un dispositif d'encapsulation (458) configuré pour encapsuler au moins partiellement l'élément (les éléments) de batterie (460), de préférence dans lequel le dispositif d'encapsulation (458) est au moins partiellement, de préférence complètement, réalisé avec au moins un matériau en mousse.

9. Ensemble batterie (300) selon l'une quelconque des revendications précédentes, comprenant en outre un couvercle thermomécanique (470), de préférence dans lequel le module de batterie (302) comprend un boîtier (450) ayant une coque ou une cuve (452) et un couvercle hermétique (454), dans lequel le couvercle thermomécanique (470) est placé sur le dessus de la coque ou de la cuve (452) et au-dessous du couvercle hermétique (454), de préférence en outre dans lequel de la mousse à cellules ouvertes est prévue entre le couvercle thermomécanique (470) et le couvercle hermétique (454).

10. Ensemble batterie (300) selon la revendication 9, dans lequel le couvercle thermomécanique est prévu avec une ou plusieurs ouvertures, de préférence situées au-dessus des interstices entre les éléments de batterie (460).

11. Ensemble batterie (300) selon l'une quelconque des revendications précédentes, comprenant en outre un dispositif de mise à l'évent (406), comprenant, en particulier, une soupape de décharge de surpression ou une soupape à rupture, le dispositif de mise à l'évent (406) étant de préférence installé à l'intérieur d'une coque ou d'une cuve (452) du module de batterie (302).

12. Aile (200) d'un aéronef (100), comprenant au moins un ensemble batterie selon l'une quelconque des revendications précédentes, monté à l'intérieur de l'aile (200).

13. Aéronef (100), comprenant au moins une aile (200) selon la revendication 12.

14. Aéronef (100) selon la revendication 13, comprenant en outre au moins un dispositif d'accès (209), de préférence dans l'aile, configuré pour fournir l'accès au moins partiel au module de batterie (302) et/ou à la structure de montage (400) depuis l'extérieur de l'aile (200).

15. Procédé pour installer au moins un ensemble batterie (300), de préférence l'ensemble batterie (300) selon l'une quelconque des revendications 1 à 11, à l'intérieur d'au moins une aile (200) d'un aéronef (100), l'ensemble batterie (300) comprenant au moins un module de batterie (302) qui comprend au moins un élément de batterie (460) et au moins une structure de montage (400), le procédé comprenant le fait de :
monter, au moyen de la structure de montage (400), le module de batterie (302) le long d'un côté de montage (402) du module de batterie (302), sur au moins une structure de support (207) à l'intérieur de l'aile (200),
dans lequel l'ensemble batterie (300) n'est pas monté le long d'un deuxième côté (403) du module de batterie (302), le deuxième côté (403) étant sensiblement opposé au côté de montage (402),
dans lequel l'ensemble batterie (300) comprend une pluralité de l'au moins un module de batterie (302), dans lequel la pluralité de modules de batterie (302) sont montés en série à l'intérieur de l'aile (200), dans lequel au moins deux modules de batterie (302) adjacents de la pluralité de modules de batterie (302) sont mécaniquement découplés l'un de l'autre au moins le long du deuxième côté (403) des modules de batterie (302),
dans lequel le côté de montage (402) s'étend de manière sensiblement perpendiculaire à une direction d'envergure de l'aile (200) et/ou de manière sensiblement perpendiculaire à un longeron avant (201) et/ou de manière sensiblement perpendiculaire à un longeron arrière (202) de l'aile (200), lorsque l'ensemble batterie (300) est monté à l'intérieur de l'aile (200).
